# EUROPÄISCHE PATENTSCHRIFT

(11) **EP 3 997 048 B1**
(45) Veröffentlichungstag und Bekanntmachung des Hinweises auf die Patenterteilung: **02.08.2023**
(21) Anmeldenummer: 20730001.3
(22) Anmeldetag: 28.05.2020
(51) Int. Cl.: C04B 28/06, C04B 111/28

(54) **TROCKENPUTZMISCHUNG FÜR EINE SPRITZBARE DÄMMUNG**
DRY PLASTER MIXTURE FOR A SPRAYABLE INSULATION
MÉLANGE D'ENDUIT À SEC POUR UNE ISOLATION PULVÉRISABLE

(30) Priorität: 12.07.2019 DE 202019103866 U
(43) Veröffentlichungstag der Anmeldung: 18.05.2022
(73) Patentinhaber: Franken Maxit Mauermörtel GmbH & Co., 95359 Kasendorf (DE)
(72) Erfinder: GROPPWEISS, Sebastian Stephan, 95359 Kasendorf (DE); SCHARFE, Friedbert Anton, 95359 Kasendorf (DE)
(74) Vertreter: Dr. Solf & Zapf Patent- und Rechtsanwalts PartG mbB
(86) Internationale Anmeldenummer: PCT/EP2020/064888
(87) Internationale Veröffentlichungsnummer: WO 2021/008765

(56) Entgegenhaltungen:
- EP-A2- 1 489 056
- WO-A1-2009/052997
- WO-A1-2010/097556
- WO-A1-2014/053341
- WO-A1-2014/162097
- WO-A1-2017/077246
- WO-A1-2018/115766
- DE-A1-102011 007 834
- DE-U1-202009 002 645
- FR-A1- 3 050 203
- US-A1- 2015 240 163

## Beschreibung

Die vorliegende Erfindung betrifft eine werksseitig vorgemischte Trockenputzmischung in Form einer Trockenmörtelmischung (Werk-Trockenmörtel) für eine spritzbare Dämmung, einen die mit Wasser angemachte Trockenputzmischung aufweisenden Frischmörtel, eine aus dem Frischmörtel hergestellte Dämmschicht und ein Verfahren zum Aufbringen einer aus dem Frischmörtel hergestellten Dämmschicht auf einen, insbesondere vertikalen, Untergrund.

Trockenmörtelmischungen sind vorfabrizierte Trockenmischungen (sogenannte Werkmörtel), bestehend aus zumindest einem mineralischen Bindemittel, zumindest einem Zuschlagstoff, in der Regel zumindest einem Zusatzstoff und/oder zumindest einem Zusatzmittel, die auf der Baustelle nur noch mit Wasser zu einem Frischmörtel angerührt werden müssen und damit gebrauchsfertig sind.

Zusatzstoffe sind fein verteilte Stoffe, die bestimmte Eigenschaften des Mörtels beeinflussen. Sie beeinflussen vorrangig die Verarbeitbarkeit des Frisch- und die Festigkeit und Dichtigkeit des Festmörtels. Im Gegensatz zu Zusatzmitteln ist die Zugabemenge im Allgemeinen so groß, dass sie bei der Stoffraumrechnung zu berücksichtigen ist. Zusatzstoffe dürfen das Erhärten des Zementes sowie die Festigkeit und Dauerhaftigkeit des Mörtels nicht beeinträchtigen. Bei den Zusatzstoffen wird unterschieden zwischen inaktiven (inerten) Zusatzstoffen und aktiven Zusatzstoffen, insbesondere puzzolanischen Zusatzstoffen und latent hydraulischen Zusatzstoffen, und organischen Zusatzstoffen. Inerte Zusatzstoffe reagieren nicht oder höchstens oberflächlich mit dem Bindemittel. Im Rahmen der Erfindung werden die aktiven Zusatzstoffe dem Bindemittelanteil zugerechnet, sofern sie zur Ausbildung der Bindemittelmatrix beitragen. Zusatzstoffe sind z.B. in der DIN EN 12620:2015-07 "Natürliche Gesteinsmehle" oder der DIN EN 15167-1 :2006-12 "Hüttensandmehl zur Verwendung in Beton, Mörtel und Einpressmörtel" genormt.

Zuschlagstoffe sind ebenfalls inert und deutlich gröber als Zusatzstoffe.

Zusatzmittel werden dem Trockenmörtel zugesetzt, um durch chemische oder physikalische Wirkung oder durch beides die Eigenschaften des Frisch- oder Festmörtels - wie z.B. Verarbeitbarkeit, Erstarren, Erhärten oder Frostwiderstand - zu beeinflussen. Zusatzmittel werden in so geringen Mengen zugegeben (< 5 M.-% des Zementanteils), dass sie als Raumanteil des Mörtels ohne Bedeutung sind. Zusatzmittel werden flüssig, pulverförmig oder als Granulat geliefert. In Trockenmörtelmischungen sind sie pulverförmig oder als Granulat enthalten. Zusatzmittel für Mörtel sind z.B. in der DIN EN 934-2:2012-08 "Zusatzmittel für Beton, Mörtel und Einpressmörtel" genormt.

Wie bereits erläutert, werden auf der Baustelle aus den Trockenmörtelmischungen bekanntermaßen durch Anmischen mit Wasser Frischmörtel hergestellt. Je nach Verwendungszweck werden die Frischmörtel dann auf den jeweiligen Bauuntergrund, gegebenenfalls schichtweise, aufgetragen.

Putze bilden bekanntermaßen einen Belag auf Außen- oder Innenwänden oder Decken eines Gebäudes. Sie bilden in der Regel eine strukturierte Oberfläche, deren Makrostruktur mit bloßem Auge zu erkennen ist. Sie weisen deshalb in der Regel zumindest einen Zuschlagstoff mit einer Korngröße ≥ 0,4 mm, bevorzugt ≥ 0,5 mm auf. Putze sind in der DIN EN 998-1 :2016 genormt.

Putze werden beispielsweise maschinell oder von Hand aufgetragen. Maschinell werden Putze auf der Baustelle mit einer Putzmaschine bzw. Mischmaschine und einer Spritzdüse aufgebracht. Die Putzmaschine bzw. Mischmaschine ist dazu an zumindest ein die Trockenmörtelmischung enthaltendes Bausilo bzw. Trockenmörtelsilo montiert.

Bei einem Wärmedämmputzmörtel handelt es sich um einen Putzmörtel mit einer Wärmeleitfähigkeit gemäß DIN EN 998-1 :2016 ≤ 0,2 W/(m·K) als Rechenwert. Um diesen Wert zu erreichen, weist ein Wärmedämmputzmörtel Leichtzuschläge, z.B. expandiertes Polystyrol (EPS), expandierten Vermiculit, Blähglaskugeln, Glashohlkugeln und/oder expandierten Perlit auf. Ein Wärmedämmputzmörtel muss gleichzeitig mindestens die Baustoffklasse B1 (schwerentflammbar) erfüllen.

Spritzbare Dämmungen bzw. Spritzdämmungen bzw. gespritzte Dämmungen sind auf dem Fachgebiet ebenfalls bekannt. Anstelle der herkömmlich verwendeten Dämmplatten wird eine Wärmedämmschicht aus mit Wasser angemischtem Wärmedämmputz auf den jeweiligen Untergrund aufgespritzt. Bei der Herstellung der Wärmedämmschicht wird mehrschichtig "frisch in frisch" gearbeitet, also in direkt aufeinanderfolgenden Arbeitsgängen bis zur gewünschten Schichtstärke mehrere Schichten Wärmedämmfrischmörtel aufgespritzt. Das Aufspritzen erfolgt in an sich bekannter Weise mittels einer Putzmaschine. Der Vorteil von spritzbaren Dämmungen liegt insbesondere darin, dass sie auch auf unebenen Untergrund aufgetragen werden können und die Schichtdicke einfach variiert werden kann.

Die aufgespritzte Wärmedämmschicht, insbesondere die aufgetragenen Frischmörtelschichten, erhärtet/erhärten dann nach dem Aufspritzen in an sich bekannter Weise, durch Erhärten des oder der Bindemittel. Es bildet sich eine Bindemittelmatrix, in die die Zuschlagstoffe und/oder die inerten Zusatzstoffe eingebettet sind. Handelt es sich bei dem Bindemittel um ein mineralisches hydraulisches Bindemittel, wie zum Beispiel Kalkhydrat, Zement und/oder Gips, erfolgt das Erhärten durch Hydratation.

Die EP 2 205 535 A1 offenbart beispielsweis einen trockenen Putzmörtel für einen Innenputz, der 10 bis 25 Gew.-% an mineralischen Bindemitteln aus Kalkhydrat, Zement und/oder Gips, 0,5 bis 20 Gew.-% Glas-Mikrohohlkugeln mit einer Körnung bis 0,3 mm, 1 bis 15 Gew.-% eines offenporigen Leichtzuschlags, 8 bis 15 Gew.-% Gesteinsmehl als Füllstoff, bis 1 Gew.-% Additive und Sand zu insgesamt 100 Gew.-% aufweist. Dabei umfasst der poröse Leichtzuschlag 1 bis 6 Gew.-% Perlite und wahlweise auch 5 bis 15 Gew.-% an Tobermorit oder ähnlichem Calciumsilikathydrat.

Die EP 1 489 056 A1 offenbart einen Oberputz für den Abschluss einer Außen- oder Innen-Grundschicht, insbesondere eines Grundputzes, der auf einer wärmespeichernden Wand wie einer mineralischen Wand aufbringbar ist, wobei der Oberputz Mikrohohlglaskugeln in einer Volumenmenge von 5 bis 70 Prozent, insbesondere von 10 bis 30 Prozent, aufweist. Bei dem Oberputz handelt es sich insbesondere um einen Kunstharzputz, einen Silikonharzputz, einen Dispersions-Silikatputz oder einen Mineralputz. Zudem weisen die Mikrohohlglaskugeln vorzugsweise einen Außendurchmesser von 2 bis 100 µm und eine Wandstärke von 0,5 bis 3 µm auf.

Aus der WO 2010/097556 A1 geht eine pulverförmige Mörtelmischung hervor, die mindestens 75 Vol.-% isolierende Mikrokugeln aufweist, wobei die Mörtelmischung mindestens 20 Vol.-% an Mikrokugeln aufweist, die einzellig sind und deren maximaler mittlerer Durchmesser kleiner als 0,5 mm ist. Bei den Mikrokugeln kann es sich um Mikroglashohlkugeln handeln. Die Mörtelmischung kann zudem mindestens 3 Vol.-%, bevorzugt mindestens 5 Vol.-%, und weniger als 20 Vol.-% Bindemittel enthalten. Bei dem Bindemittel handelt es sich vorzugsweise um Zement, vorzugsweise Portlandzement. Erwähnt wird auch Calciumsulfoaluminatzement. Auch wird erwähnt, dass die Mörtelmischung durch Spritzen aufgetragen werden kann.

Die WO 2017/077246 A1 offenbart eine trockene, spritzbare Mörtelzusammensetzung, welche zur Herstellung eines dämmenden Mörtels dienen kann. Aus dem Mörtel kann ein Außenwärmedämm- oder Innenwärmedämmsystem mit einer Schichtdicke zwischen 2 und 30 cm hergestellt werden. Des Weiteren kann die trockene Mörtelzusammensetzung als primäres Bindemittel Kalk und/oder eine Aluminiumoxidquelle und/oder eine Calciumsulfatquelle aufweisen, wobei es sich bei der Aluminiumoxidquelle um Calciumsulfoaluminatzement handeln kann. Die trockene Mörtelzusammensetzung weist zudem immer einen Füllstoff aus biologischer Quelle, vorzugsweise pflanzlichen Ursprungs, auf.

Die WO 2017/077246 A1 offenbart auch eine spezielle Bindemittelzusammensetzung, welche eine Aluminiumoxidquelle, welche unter anderem Calciumsulfoaluminat sein kann, aufweisen kann. Zudem kann das Bindemittel eine Vielzahl von unterschiedlichen Füllstoffen, unter anderem in Form von expandierten Glaskugeln oder Aerogel, aufweisen.

Aus der FR 3 050 203 A1 geht eine isolierende Mörtelmischung hervor, welche mindestens 40 M.-% eines mineralischen Leichtzuschlagstoffes mit einer Schüttdichte < 200 kg/m³ sowie ein mineralisches Bindemittel aufweist, bei dem es sich unter anderem um Calciumsulfoaluminatzement handeln kann. Zudem kann die Mörtelmischung eine Vielzahl von unterschiedlichen Leichtzuschlägen, unter anderem Mikroglashohlkugeln, aufweisen. Die Mörtelmischung kann zudem mittels Spritzen aufgebracht werden. Im Rahmen der Ausführungsbeispiele der FR 3 050 203 A1 werden unterschiedliche, calciumsulfoaluminatzementhaltige Mörtelmischungen hergestellt. Dabei liegt der Gehalt an Calciumsulfoaluminatzement immer deutlich unter 30 M.-%.

Die WO 2018/115766 A1 offenbart ein Dämmsystem für eine Außenwand, welches zumindest ein nichtmetallisches, dreidimensionales Verstärkungselement mit Aussparungen aufweist, wobei zudem eine thermisch isolierende Mörtelschicht vorhanden ist, welche die Aussparungen und Lücken des Verstärkungselements ausfüllt. Der Mörtel der Mörtelschicht kann dabei eine Vielzahl von unterschiedlichen Leichtzuschlägen, unter anderem Mikroglashohlkugeln, und eine Vielzahl von unterschiedlichen Bindemitteln, unter anderem Calciumsulfoaluminatzement, enthalten.

Aufgabe der vorliegenden Erfindung ist die Bereitstellung einer Trockenputzmischung zur Herstellung einer gespritzten Wärmedämmschicht, die dauerhaft eine hohe Wärmedämmung und gleichzeitig eine hohe Frost-/Taubeständigkeit sowie gute Festigkeitseigenschaften aufweist, und einfach und sicher auf den jeweiligen Untergrund aufbringbar ist.

Weitere Aufgabe ist die Bereitstellung eines Frischmörtels, der die Trockenputzmischung enthält, einer aus dem Frischmörtel hergestellten Dämmschicht und eines Verfahrens zur Herstellung der Dämmschicht.

Diese Aufgaben werden durch eine Trockenputzmischung bzw. eine trockene Putzmischung mit den Merkmalen von Anspruch 1, einen Frischmörtel mit den Merkmalen von Anspruch 12, eine Dämmschicht mit den Merkmalen von Anspruch 13 und ein Verfahren gemäß Anspruch 14 gelöst. Vorteilhafte Weiterbildungen der Erfindung sind in den sich anschließenden Unteransprüchen gekennzeichnet.

Im Folgenden wird die Erfindung anhand einer Zeichnung beispielhaft näher erläutert. Es zeigen:
- Figur 1:: Eine rasterelektronenmikroskopische Aufnahme eines Schliffes eines aus der erfindungsgemäßen Trockenputzmischung hergestellten, hydratisierten Prüfkörpers
- Figur 2:: Eine REM-Aufnahme von Mikroglashohlkugeln, gelagert für 14 Tage bei 60°C in einer Calciumsulfoaluminatklinker und Weißkalkhydrat enthaltenden Lösung
- Figur 3:: Eine REM-Aufnahme der Mikroglashohlkugeln, gelagert für 90 Tage bei 60°C in einer Calciumsulfoaluminatklinker und Weißkalkhydrat enthaltenden Lösung
- Figur 4:: Eine REM-Aufnahme der Mikroglashohlkugeln, gelagert für 14 Tage bei 60°C in einer Portlandzement enthaltenden Lösung

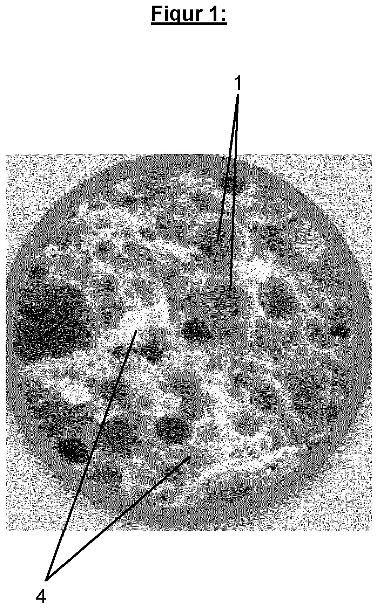

Die erfindungsgemäße Trockenputzmischung weist 36 bis 52 M.-%, vorzugsweise 40 bis 47 M.-%, Mikroglashohlkugeln 1 (Fig. 1-3) und 40 bis 56 M.-%, vorzugsweise 45 bis 53 M.-% Calciumsulfoaluminatzement auf. Vorzugsweise besteht die Trockenputzmischung zu mindestens 91 M.-%, bevorzugt zu mindestens 94 M.-%, besonders bevorzugt zu mindestens 96 M.-%, aus dem Calciumsulfoaluminatzement und den Mikroglashohlkugeln.

Die im Rahmen der Erfindung angegebenen Massenanteile beziehen sich selbstverständlich immer auf die Trockenmasse.

Zudem weist die Trockenputzmischung vorzugsweise 4 bis 9 M.-%, bevorzugt 6 bis 9 M.-% weitere Bestandteile auf. Bevorzugt weist die Trockenputzmischung zumindest einen Zusatzstoff und/oder zumindest ein Zusatzmittel und/oder Fasern auf.

Calciumsulfoaluminatzement (kurz CSA-Zement) ist eine in China entwickelte Zementart. Auf dem Markt erhältlicher Calciumsulfoaluminatzement besteht in der Regel aus Calciumsulfoaluminatklinker und Anreger, z.B. Gips oder Anhydrit. Auf dem Markt erhältlicher Calciumsulfoaluminatzement kann aber auch ausschließlich aus gemahlenem Calciumsulfoaluminatklinker bestehen. Calciumsulfoaluminatklinker wird aus den Rohstoffen Kalkstein, Bauxit und Gips durch Brennen bei ca. 1250-1350°C in einem Drehrohrofen und anschließendes Aufmahlen hergestellt. Calciumsulfoaluminatklinker hat als Hauptkomponente das wasserfreie Sulfat Ye'elimit der Zusammensetzung C₃A₃Cs (Ca₄Al₆O₁₂(SO₄). Daneben koexistieren C₂S (Belit), Gehlenit, Brownmillerit, Ternesit, Spinell und weitere Nebenphasen. Bei der Hydratation von Calciumsulfoaluminatzement können sich Ettringit, Monosulfat, Aluminiumhydroxid, CSH-Gel (Calciumsilkathydrat-Gel), Strätlingit und Calciumhydroxid bilden. Werden eisenreiche Rohstoffe verwendet, entsteht ein ferritischer Calciumsulfoaluminatklinker.

Der erfindungsgemäße Calciumsulfoaluminatzement besteht aus Calciumsulfoaluminatklinker und zumindest einer Calciumsulfatkomponente als Anreger für den Calciumsulfoaluminatklinker. Gegebenenfalls vorhandene Nebenbestandteile werden dem Calciumsulfoaluminatzement somit nicht zugerechnet.

Vorzugsweise handelt es sich bei der Calciumsulfatkomponente um Anhydrit. Es kann sich aber auch um Gips oder Halbhydrat handeln. Der Calciumsulfoaluminatzement kann auch Gemische aus den genannten Calciumsulfatkomponenten aufweisen. Vorzugsweise ist aber ausschließlich Anhydrit enthalten. Vorzugsweise weist der Calciumsulfoaluminatzement eine Gesamtmenge von 8 bis 22 M.-%, bevorzugt 12 bis 18 M.-%, an Calciumsulfatkomponente auf.

Wie bereits oben erläutert bilden der Calciumsulfoaluminatklinker und die zumindest eine Calciumsulfatkomponente den Calciumsulfoaluminatzement. Somit wird im Rahmen der Erfindung der Anteil an Anhydrit dem Anteil an Bindemittel zugerechnet. Calciumsulfoaluminatzemente sind auf dem Markt vorgemischt erhältlich. Sie können neben dem Calciumsulfoaluminatklinker und dem Anhydrit auch noch weitere Nebenbestandteile aufweisen. Deren Anteil ist aber < 5 M.-%, bezogen auf den Zement. Wie bereits erläutert, werden die Nebenbestandteile im Rahmen der Erfindung nicht dem Calciumsulfoaluminatzement zugerechnet, sondern dazu addiert.

Im Rahmen der Erfindung wird dabei vorzugsweise ein Calciumsulfoaluminatzement verwendet, der ein schnelles Abbindeverhalten hat.

Insbesondere beträgt der Versteifungsbeginn des Calciumsulfoaluminatzements 3 bis 7 Minuten, bevorzugt 4 bis 6 Minuten, gemäß DIN EN 13279-2:2014-03.

Und das Schüttgewicht gemäß DIN EN 1015-1:2007-05 des Calciumsulfoaluminatzements liegt vorzugsweise bei 0,8 bis 1,2 kg/dm³.

Zudem liegt bei dem Calciumsulfoaluminatzement der Anteil an Körnungen > 0,063 mm vorzugsweise bei 0 bis 2 M.-%. Und/oder der Anteil an Körnungen > 0,09 mm liegt bei 0 M.-%.

Vorzugsweise weist der verwendete bzw. in der Trockenputzmischung enthaltene Calciumsulfoaluminatzement zudem einen Gehalt an Na₂O ≤ 2,5 M.-%, bevorzugt 0 M.-%, bestimmt mittels RDA (Röntgendiffraktometrie mit Bruker D8 advance eco mittels Rietveld) auf. Denn es wurde festgestellt, dass der Gehalt an Na₂O das Abbindeverhalten negativ beeinflussen kann.

Vorzugsweise weist der verwendete bzw. in der Trockenputzmischung enthaltene Calciumsulfoaluminatzement zudem einen C₂S-Gehalt (Belit) von 18 bis 30 M.-%, bevorzugt 20 bis 27 M.-%, auf. Der C₂S-Gehalt wird ermittelt aus der Mineralogie des Zements. Diese wiederum wird ebenfalls durch RDA (Röntgendiffraktometrie mit Bruker D8 advance eco) mittels Rietveld ermittelt. Dazu werden die Proben entsprechend vorbereitet und gepresst.

Die Mikroglashohlkugeln 1 der erfindungsgemäßen Trockenputzmischung sind zudem geschlossenzellig ausgebildet. Sie weisen eine Kugelwandung 2 mit einer geschlossenen Kugeloberfläche 3 auf. Die Kugelwandung 2 umgibt einen Kugelinnenraum. Zudem sind die Mikroglashohlkugeln 1 einzellig ausgebildet. Das heißt, der Kugelinnenraum ist nicht in mehrere Zellen unterteilt, sondern einzellig ausgebildet.

Des Weiteren bestehen die Mikroglashohlkugeln 1 vorzugsweise aus Borsilikatglas oder Kalknatronglas (Recyclingglas). Bevorzugt bestehen sie aber aus Borsilikatglas.

Vorzugsweise weisen die Mikroglashohlkugeln 1 der erfindungsgemäßen Trockenputzmischung zudem einen mittleren Teilchendurchmesser d₅₀ von 45 bis 60 µm, bevorzugt von 50 bis 55 µm, und/oder einen d₉₀-Wert von 70 bis 105 µm, bevorzugt von 75 bis 85 µm, bestimmt jeweils gemäß ISO 13320:2009-10 mittels Lasergranulometrie, auf. Der dₓ-Wert gibt an, dass x [Vol.-%] der Teilchen einen Durchmesser kleiner als den angegeben Wert aufweisen.

Vorzugsweise weisen die Mikroglashohlkugeln 1 der erfindungsgemäßen Trockenputzmischung zudem einen maximalen Teilchendurchmesser, bestimmt gemäß ISO 13320:2009-10 mittels Lasergranulometrie, von ≤ 115 µm auf.

Für die Bestimmung der Teilchengrößen wird vorzugsweise das Gerät CILAS 1064 nass verwendet.

Vorzugsweise weisen die Mikroglashohlkugeln 1 der erfindungsgemäßen Trockenputzmischung zudem eine Schüttdichte gemäß DIN EN 459-2:2010-12, von 60 bis 100 g/cm³, bevorzugt von 75 bis 85 g/cm³, auf.

Vorzugsweise weisen die Mikroglashohlkugeln 1 der erfindungsgemäßen Trockenputzmischung zudem eine Nenndichte (Teilchendichte) bestimmt mittels Pyknometer mit der Testmethode QCM 14.24.1 der Firma 3M von 0,13 bis 0,17 g/cm³, bevorzugt von 0,14 bis 0,16 g/cm³, auf.

Im Rahmen der Erfindung hat sich gezeigt, dass die oben aufgeführten Eigenschaften der Mikroglashohlkugeln 1 bezüglich Teilchengröße und Dichte, jede Eigenschaft für sich und in jeglicher Kombination, eine gute Einmischung der Mikroglashohlkugeln 1 gewährleisten bei gleichzeitig guter Dämmwirkung. Insbesondere wird eine Entmischung der Mikroglashohlkugeln 1 auch in der Frischmörtelmischung vermieden.

Zudem weisen die Mikroglashohlkugeln 1 der erfindungsgemäßen Trockenputzmischung eine hohe isostatische Druckfestigkeit bestimmt mittels der Testmethode QCM 14.1.5 der Firma 3M auf. Bei einem Testdruck von 21 bar beträgt der Anteil unzerstörter Mikroglashohlkugeln 1 vorzugsweise mindestens 80 Vol.-%, bevorzugt mindestens 85 Vol.-%. Dies verbessert auch die Festigkeitseigenschaften der hergestellten Dämmschicht.

Zudem weisen die Mikroglashohlkugeln 1 der erfindungsgemäßen Trockenputzmischung vorzugsweise eine Wärmeleitfähigkeit λ₁₀ₜᵣ gemäß DIN EN 12664:2001-05, von 0,045 bis 0,065 W/m·K, bevorzugt von 0,05 bis 0,06 W/m·K, auf.

Im Rahmen der Erfindung liegt es dabei auch, dass die Trockenputzmischung als inerten Zusatzstoff zusätzlich zu den Mikroglashohlkugeln 1 Zusatzstoffkörner aus Aerogel aufweist. Die Menge an Aerogel und Mikroglashohlkugeln 1 zusammen entspricht dabei der oben angegebenen Menge für Mikroglashohlkugeln 1 allein, also falls kein Aerogel enthalten ist. Der Anteil an Aerogel in der Trockenputzmischung beträgt dabei ≤ 30 M.-%, bevorzugt ≤ 20 M.-%.

Zusätzlich zu den Mikroglashohlkugeln 1 und/oder dem Aerogel kann die Trockenputzmischung zudem zumindest einen weiteren inerten Zusatzstoff (also anderen Zusatzstoff als die Mikroglashohlkugeln und/oder das Aerogel) aufweisen. Beispielsweise kann die Trockenputzmischung Kalksteinmehl aufweisen. Die Gesamtmenge an weiteren Zusatzstoffen liegt vorzugsweise bei ≤ 5 M.-%, bevorzugt ≤ 3 M.-%.

Vorzugsweise weist die erfindungsgemäße Trockenputzmischung zudem zumindest ein Zusatzmittel auf. Die Gesamtmenge an Zusatzmitteln in der erfindungsgemäßen Trockenputzmischung beträgt vorzugsweise 6 bis 9 M.-%, bevorzugt 7 bis 8 M.-%.

Vorzugsweise weist die Trockenputzmischung zumindest einen Luftporenbildner und/oder zumindest ein Wasserretentionsmittel, z.B. Methylcellulose, und/oder zumindest ein Verdickungsmittel und/oder zumindest ein Dispersionspulver und/oder zumindest ein Hydrophobierungsmittel als Zusatzmittel auf. Insbesondere der Luftporenbildner sorgt für eine vorteilhafte offene Porosität, so dass die aus der Trockenputzmischung hergestellte Dämmschicht diffusionsoffen ist.

Vorzugsweise weist die erfindungsgemäße Trockenputzmischung außerdem Fasern, bevorzugt in Mengen von 0,5 bis 2 M.-%, insbesondere in Mengen von 0,8 bis 1 M.-%, auf. Die Fasern weisen vorzugsweise eine Faserlänge von 4 bis 8 mm, bevorzugt 5 bis 7 mm, auf. Bei den Fasern handelt es sich vorzugsweise um Glasfasern und/oder Polymerfasern. Die Fasern erhöhen die Festigkeit der aus der Trockenputzmischung hergestellten Dämmschicht. Fasern werden im Rahmen der Erfindung weder als Zusatzstoffe noch als Zuschlagstoffe angesehen, sondern als eigenständige Kategorie.

Die restliche Trockenputzmischung ohne die Fasern weist vorzugsweise eine maximale Korngröße ≤ 0,2 mm auf. Lediglich die Fasern sind also > 0,2 mm. Die Trockenputzmischung ist also sehr feinkörnig, was besonders vorteilhaft ist.

Des Weiteren kann die erfindungsgemäße Trockenputzmischung zumindest ein weiteres Bindemittel aufweisen. Als Bindemittel werden, wie oben erläutert, auch aktive Zusatzstoffe angesehen, die zur Ausbildung der Bindemittelmatrix beitragen. Die Gesamtmenge an weiterem Bindemittel (außer dem Calciumsulfoaluminatklinker und der Calciumsulfatkomponente) liegt bei ≤ 9 M.-%, bevorzugt ≤ 5 M.-%. Bei dem zumindest einen weiteren Bindemittel handelt es sich vorzugsweise um Portlandzementklinker und/oder Kalkhydrat und/oder Branntkalk.

Die erfindungsgemäße Trockenputzmischung weist zudem vorzugsweise ein Schüttgewicht gemäß DIN EN 459-2:2010-12 von 120 bis 150 kg/m³, bevorzugt von 130 bis 140 kg/m³ auf. Es handelt sich also um einen Leichtputzmörtel Typ 1 gemäß DIN EN 998-1:2016.

Vorzugsweise weist die erfindungsgemäßen Trockenputzmischung zudem folgende Korngrößenverteilung auf, ermittelt anhand des Siebdurchgangs gemäß DIN EN 1015-1:2007-05 (die einzelnen Komponenten addieren sich zu 100 M.-%):

| | **[M.-%]** | |
|---|---|---|
| **Korngrößen** | | **vorzugsweise** |
| **≤ 0,04 mm** | 42-53 | 45-50 |
| **> 0,04 -0,063 mm** | 14-31 | 16-23 |
| **> 0,063 - 0,09 mm** | 11-27 | 14-22 |
| **> 0,09 - 0,2 mm** | 4-17 | 5-13 |
| **> 0,2 mm** | 0-3 | 0-2 |

Wie bereits erläutert, wird aus der erfindungsgemäßen Trockenputzmischung vom jeweiligen Anwender zunächst ein Frischmörtel hergestellt. Dazu wird die Trockenputzmischung in an sich bekannter Weise mit Anmachwasser gemischt. Dies erfolgt beispielsweise in einer an sich bekannten Putzmaschine.

Die Trockenputzmischung wird dabei als Sackware oder als Siloware in einem Bausilo bzw. Trockenmörtelsilo an den jeweiligen Einsatzort, insbesondere die Baustelle, geliefert. Dass die erfindungsgemäße Trockenputzmischung in einem Bausilo angeliefert werden kann, war dabei überraschend. Denn in der Regel neigt Leichtmörtel zur Entmischung. Dies ist jedoch bei der erfindungsgemäßen Trockenputzmischung trotz ihres sehr geringen Schüttgewichts nicht der Fall.

Der durch Anmischen der erfindungsgemäßen Trockenputzmischung mit Wasser hergestellte Frischmörtel weist zudem vorzugsweise eine Frischmörtelrohdichte gemäß DIN EN 1015-6:2007-05 von 300 bis 500 kg/m³, bevorzugt von 390 bis 450 kg/m³, auf.

Vorzugsweise wird zudem ein Frischmörtel hergestellt, der einen sehr geringen w/f-Wert aufweist. Das heißt, der Anmachwasserbedarf der erfindungsgemä-ßen Trockenputzmischung ist sehr gering. Dies resultiert einerseits aus den geschlossenen Mikroglashohlkugeln 1, die kein Anmachwasser aufsaugen. Gleichzeitig wirken die Mikroglashohlkugeln 1 als Art Kugellager, sie können aneinander abrollen, wodurch für eine gute Verarbeitbarkeit weniger Wasser als bei vergleichbaren Leichtmörteln notwendig ist. Der Anmachwasserbedarf gemäß DIN EN 1015-2:2007-05 liegt vorzugsweise bei 160 bis 240 M.-%, bevorzugt 180 bis 220 M.-%, bezogen auf die Trockenmasse der Trockenputzmischung.

Wie bereits erläutert, dient der aus der erfindungsgemäßen Trockenputzmischung hergestellte Frischmörtel zur Herstellung einer aufgespritzten Wärmedämmschicht. Dazu wird der Frischmörtel vorzugsweise maschinell mittels einer Putzmaschine angemischt und, gegebenenfalls schichtweise, also frisch auf frisch, auf den jeweiligen Untergrund aufgespritzt. Frisch auf frisch meint bekanntermaßen, dass die nächste Frischmörtelschicht auf die vorhergehende, noch nicht erhärtete Frischmörtelschicht aufgebracht wird.

Vorzugsweise wird dabei eine Dämmschicht hergestellt, die eine Dicke von 20 bis 200 mm, bevorzugt 60 bis 100 mm, aufweist. Eine Dämmschicht von bis zu 100 mm Dicke kann dabei auch einschichtig hergestellt werden. Ab einer Dicke von > 100 mm wird zudem vorzugsweise ein Putzträger verwendet, um die Haftung der Dämmschicht an dem Untergrund zu verbessern.

Im Rahmen der Erfindung wurde herausgefunden, dass es trotz des sehr hohen Anteils an Mikroglashohlkugeln 1 möglich ist, den Frischmörtel mittels herkömmlichen Putzmaschinen auf den jeweiligen, meist vertikalen, Untergrund, insbesondere eine Wand aufzubringen, ohne dass die aufgetragene Frischmörtelschicht von dem Untergrund abläuft.

Denn die Mikroglashohlkugeln 1 haben bekanntermaßen eine sehr glatte äußere Kugeloberfläche, so dass die einzelnen Mikroglashohlkugeln 1 wie bei einem Kugellager aneinander und an der Wand abrollen, was die Haftung an der Wand erschwert. Dennoch sorgt offenbar der Calciumsulfoaluminatklinker aufgrund seiner relativ schnellen Abbindezeit dafür, dass die Mikroglashohlkugeln fixiert werden und die Frischmörtelschicht richtig an dem Untergrund haftet.

Zudem wurde im Rahmen der Erfindung überraschenderweise festgestellt, dass die Mikroglashohlkugeln 1 auch in der erhärteten aufgespritzten Dämmschicht dauerhaft stabil sind. In der erhärteten aufgespritzten Dämmschicht sind die Mikroglashohlkugeln 1 in an sich bekannter Weise in eine Bindemittelmatrix 4 eingebettet. Die Bindemittelmatrix 4 besteht aus dem oder den erhärteten Bindemittel(n), insbesondere besteht sie zumindest größtenteils aus dem hydratisierten Calciumsulfoaluminatklinker. Es handelt sich also um eine Zementsteinmatrix. In der Bindemittelmatrix 4 herrscht bekanntermaßen aber ein alkalisches Milieu. Der pH-Wert liegt bei ca. pH = 13,5. Somit wären eigentlich Auflösungserscheinungen der Mikroglashohlkugeln 1 aufgrund des alkalischen Milieus zu erwarten gewesen. Überraschenderweise ist dies aber nicht der Fall.

Es wird vermutet, dass sich an der Kugeloberfläche 3 eine Schicht 5 aus Hydratphasen (wahrscheinlich CASH-Phasen) ausbildet. Die Schicht 5 ist vermutlich mit der Kugeloberfläche 3 verwachsen. Offenbar regiert der Calciumsulfoaluminatklinker oberflächlich mit den Mikroglashohlkugeln 1, insbesondere mit dem SiO₂. Dies könnte darauf zurückzuführen sein, dass Calciumsulfoaluminatklinker einen deutlich geringeren Anteil an SiO₂ als z.B. Portlandzementklinker hat, welcher größtenteils aus C₂S und C₃S besteht. Die Schicht 5 verhindert dann weitere Auflösungserscheinungen, so dass die Mikroglashohlkugeln 1 dauerhaft stabil sind.

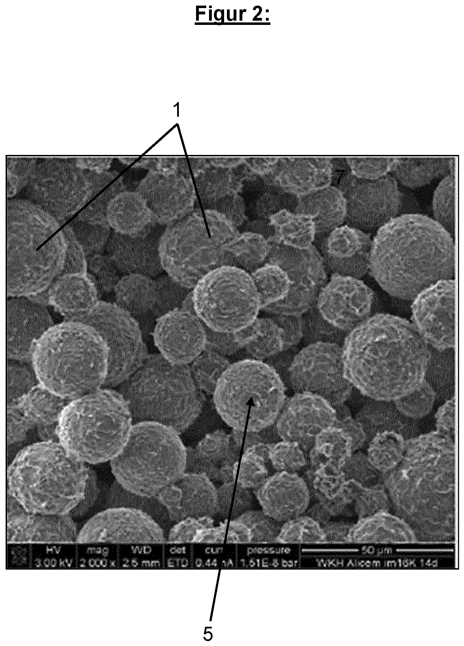

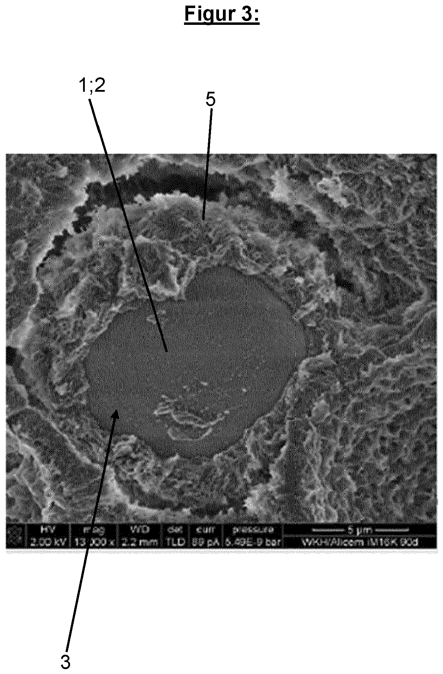

Die diffusionshemmende Schicht 5 ist in Figuren 2 und 3 gut zu erkennen. Figur 2 zeigt eine REM-Aufnahme von Mikroglashohlkugeln 1, welche für 14 Tage bei 60°C in einer Calciumsulfoaluminatzement und Weißkalkhydrat enthaltenden Lösung gelagert wurden. Figur 3 zeigt eine REM-Aufnahme von Mikroglashohlkugeln 1, welche für 90 Tage bei 60°C in der Lösung gelagert wurden. Es ist gut zu erkennen, dass die Mikroglashohlkugeln 1 nicht aufgelöst wurden.

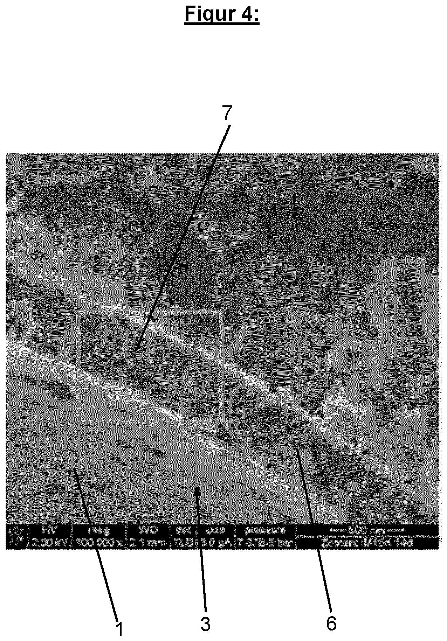

Dagegen ist in Figur 4 zu erkennen, dass sich bei der Portlandzement enthaltenden Lösung ebenfalls eine Schicht 6 gebildet hat, allerdings mit Kanälen 7, so dass diese Schicht 6 weniger diffusionshemmend ist.

Im Rahmen der Erfindung wurde zudem festgestellt, dass eine aus der erfindungsgemäßen Trockenputzmischung hergestellte Dämmschicht sehr gute Festigkeitseigenschaften aufweist. Diese resultieren einerseits aus der guten Einbindung der Mikroglashohlkugeln 1 in die Bindemittelmatrix 4. Wie bereits erläutert, sind die Mikroglashohlkugeln 1 mit der Bindemittelmatrix 4 oberflächlich verwachsen. Zudem ähnelt die Struktur der erhärteten Dämmschicht der Struktur menschlicher Knochen.

Vorzugsweise weist die erfindungsgemäße Trockenputzmischung eine Mörteldruckfestigkeit gemäß DIN EN 1015-11:2007-05 von 0,6 bis 1,0 N/mm², bevorzugt von 0,75 bis 0,85 N/mm² auf.

Vorzugsweise weist die erfindungsgemäße Trockenputzmischung eine Mörtelbiegefestigkeit gemäß DIN EN 1015-11:2007-05 von 0,6 bis 1,0 N/mm², bevorzugt von 0,7 bis 0,9 N/mm² auf.

Die Diffusionswiderstandszahl nach DIN ISO 12572:2017-05 der erfindungsgemäßen Trockenputzmischung beträgt vorzugsweise 4,0 bis 5,0, bevorzugt 4,2 bis 4,6. Die Mörtelprobenkörper werden dazu nach der Mörtelnorm DIN EN 1015-11:2007-05 hergestellt.

Diese resultiert unter anderem aus der guten offenen Porosität, bestimmt mittels Pyknometer gemäß DIN EN 1936:2007-02 Diese beträgt vorzugsweise 50 bis 54 Vol.-%, bevorzugt 51 bis 57 Vol.-%. Die Mörtelprobenkörper werden dazu nach der Mörtelnorm DIN EN 1015-11:2007-05 hergestellt.

Und die offene Porosität zusammen mit der aus den Mikroglashohlkugeln 1 resultierende geschlossene Porosität sorgt natürlich für eine hervorragende Wärmedämmung. Aufgrund der offenen Porosität ist aber trotzdem das Austrocknungsverhalten sehr gut. Auch verbessern die offenen Poren die Rheologie.

Insbesondere ist zudem auch die Bindemittelmatrix mit feinsten Poren durchsetzt.

Der Wasseraufnahmekoeeffizient nach DIN EN ISO 15148:2018-12 der erfindungsgemäßen Trockenputzmischung beträgt vorzugsweise 1 bis 3 kg/m²·h^{0,5}, bevorzugt 1,4 bis 2,5 kg/m²·h^{0,5}. Er ist insbesondere aufgrund der geschlossenen Poren sehr niedrig.

Gleichzeitig weist die erfindungsgemäße Trockenputzmischung aufgrund des hohen Anteils an Mikroglashohlkugeln 1 aber eine sehr geringe Wärmeleitfähigkeit λ₁₀ₜᵣ gemäß DIN EN 12664:2001-05 auf, vorzugsweise von 0,032 bis 0,055 W/m·K, bevorzugt von 0,038 bis 0,042 W/m K. Somit handelt es sich bei der erfindungsgemäßen Trockenputzmischung um einen Wärmedämmputz gemäß DIN EN 998-1:2016.

Die Mikroglashohlkugeln 1 schaffen einen definierten Porenraum mit geschlossenen Poren in der hergestellten Dämmschicht. Überraschend dabei war, dass die Mikroglashohlkugeln 1 in der Putzmaschine nicht zerstört werden. Somit ist der durch die Mikroglashohlkugeln 1 geschaffene Porenraum in der Dämmschicht sehr genau einstellbar. Gleichzeitig ist aber, insbesondere aufgrund des Luftporenbildners, eine offene Porosität vorhanden, die unter anderem das schnelle Austrocknen gewährleistet.

Zudem ist die Frost-/Taubeständigkeit der erfindungsgemäßen Trockenputzmischung sehr gut. Dies resultiert ebenfalls hauptsächlich aus dem hohen Anteil an geschlossenzelligen Mikroglashohlkugeln 1. Denn, da die Mikroglashohlkugeln 1 eine geschlossene Kugeloberfläche 4 aufweisen, kann kein Wasser in diese eindringen. Der erhärtete, hydratisierte Putz ist somit geschlossenzellig. Bei herkömmlichen Leichtputzen dringt das Wasser in die offenen Poren des erhärteten Putzes ein, was zu Problemen bei Frost/Tauwechsel führt.

Nach dem CIT Test für Betone wurde die Dauerhaftigkeit bzw. Frost/Tauwechsel bestimmt mit dem Ergebnis:
Trotz überdimensionierte Beanspruchung keine Abwitterung an den Proben und nur einen Masseverlust von < 2,5%.

Außerdem ist die Rissanfälligkeit der erfindungsgemäßen Trockenputzmischung sehr gering. Die Mikroglashohlkugeln 1 wirken offenbar rissüberbrückend. Zudem weist der Calciumsulfoaluminatzement eine geringere Schwindung als z.B. Portlandzement auf, was ebenfalls die Rissanfälligkeit der Trockenputzmischung bei der Erhärtung erniedrigt. Es entsteht lediglich ein leichtes Quellen von + 0,01 mm/m.

Schließlich ist die Herstellung der erfindungsgemäßen Trockenputzmischung umweltverträglicher, da bei der Herstellung von Calciumsulfoaluminatzement weniger CO₂ frei gesetzt wird als bei der Herstellung von Portlandzementklinker.

Im Folgenden wird eine beispielhafte Rezeptur [M.-%] der erfindungsgemäßen Trockenputzmischung angegeben:

| **Ausführungsbeispiel** | | | |
|---|---|---|---|
| | **Hersteller/Typ** | **Anteil** | **Anteil** |
| | | **[kg/t]** | **[M.-%]** |
| Mikrohohlglaskugeln | 3M/K15 | 475 | 47,5 |
| CSA Zement | Buzzi Next Base | 450 | 45 |
| Luftporenbildner | Hostapur | 2,5 | 0,25 |
| Kalksteinmehl (Zusatzstoff) | Bergmann Kalk KSM90 | 20,4 | 2,04 |
| Methylzellulose (Wasserretentionsmittel) | Shin Etsu E 517001 | 5 | 0,5 |
| Stabilisierer (Verdicker) | Tylovis SE7 | 0,7 | 0,07 |
| Dispersion | Wacker Vinnapas 5044N | 29,2 | 2,92 |
| Fasern | Cemfill R62,4 | 8 | 0,8 |
| Verzögerer | Weinsäure | 3,2 | 0,32 |
| Hydrophobierungsmittel | Natriumoleat Greven | 4 | 0,4 |
| Stärkeether (Verdicker) | BCD Webco starch | 2 | 0,2 |
| **SUMME** | | **1000** | **100** |

Diese Trockenputzmischung hat folgende Eigenschaften:
Die Trockenputzmischung weist eine Mörteldruckfestigkeit gemäß DIN EN 1015 -11:2007 von 0,90 N/mm² sowie eine Wärmeleitfähigkeit A λ₁₀ₜᵣ gemäß DIN EN 12664:2001-05 von 0,038 W/m K auf. Die Frosttauwechselbeständigkeit nach CIF liegt bei 2,5 %.

Abschließend wird darauf hingewiesen, dass alle genannten, insbesondere beanspruchten, Merkmale der Trockenputzmischung für sich genommen und in jeglicher Kombination besonders vorteilhaft und Gegenstand der vorliegenden Erfindung sind.

## Patentansprüche

1. Werksseitig angemischte Trockenputzmischung für eine spritzbare Dämmung, aufweisend zumindest ein Bindemittel und zumindest einen Zuschlagstoff,
**dadurch gekennzeichnet, dass**
die Trockenputzmischung aufweist
- 36 bis 52 M.-%, vorzugsweise 40 bis 47 M.-%, Mikroglashohlkugeln (1) oder in Summe 36 bis 52 M.-%, vorzugsweise 40 bis 47 M.-%, Mikroglashohlkugeln (1) und Aerogel, wobei der Anteil an Aerogel in der Trockenputzmischung ≤ 30 M.-%, bevorzugt ≤ 20 M.-%, beträgt,
und
- 40 bis 56 M.-%, vorzugsweise 45 bis 53 M.-%, Calciumsulfoaluminatzement aus Calciumsulfoaluminatklinker und zumindest einer Calciumsulfatkomponente als Anreger für den Calciumsulfoaluminatklinker.

2. Trockenputzmischung nach Anspruch 1,
**dadurch gekennzeichnet, dass**
die Trockenputzmischung
a) eine Mörteldruckfestigkeit gemäß DIN EN 1015-11:2007-05 von 0,6 bis 1,0 N/mm², bevorzugt von 0,75 bis 0,85 N/mm²,
und/oder
b) eine Mörtelbiegefestigkeit gemäß DIN EN 1015-11:2007-05 von 0,6 bis 1,0 N/mm², bevorzugt von 0,7 bis 0,9 N/mm²,
aufweist.

3. Trockenputzmischung nach einem der vorhergehenden Ansprüche,
**dadurch gekennzeichnet, dass**
a) die Trockenputzmischung zu mindestens 91 M.-%, vorzugsweise zu mindestens 94 M.-%, bevorzugt zu mindestens 96 M.-%, aus dem Calciumsulfoaluminatzement und den Mikroglashohlkugeln (1) besteht,
und/oder
b) die Trockenputzmischung 4 bis 9 M.-%, bevorzugt 6 bis 9 M.-% weitere Bestandteile aufweist, wobei die Trockenputzmischung vorzugsweise zumindest einen Zusatzstoff und/oder zumindest ein Zusatzmittel und/oder Fasern aufweist,
und/oder
c) die Trockenputzmischung zumindest einen Luftporenbildner und/oder zumindest ein Wasserretentionsmittel, z.B. Methylcellulose, und/oder zumindest ein Verdickungsmittel und/oder zumindest ein Dispersionspulver und/oder zumindest ein Hydrophobierungsmittel und/oder zumindest einen Verzögerer als Zusatzmittel aufweist.

4. Trockenputzmischung nach einem der vorhergehenden Ansprüche,
**dadurch gekennzeichnet, dass**
der Calciumsulfoaluminatzement einen Versteifungsbeginn von 3 bis 7 Minuten, bevorzugt 4 bis 6 Minuten, gemäß DIN EN 13279-2:2014-03 aufweist.

5. Trockenputzmischung nach einem der vorhergehenden Ansprüche,
**dadurch gekennzeichnet, dass**
a) die Trockenputzmischung eine Wärmeleitfähigkeit λ₁₀ₜᵣ gemäß DIN EN 12664:2001-05 auf von 0,032 bis 0,055 W/m.K, bevorzugt von 0,038 bis 0,042 W/m.K, aufweist
und/oder
b) die Trockenputzmischung ein Schüttgewicht gemäß DIN EN 459-2:2010-12 von 120 bis 150 kg/m³, bevorzugt von 130 bis 140 kg/m³, aufweist
und/oder
c) die Trockenputzmischung folgende Korngrößenverteilung aufweist, ermittelt anhand des Siebdurchgangs gemäß DIN EN 1015-1:2007-05 (die einzelnen Komponenten addieren sich zu 100 M.-%):
| | **[M.-%]** | |
|---|---|---|
| **Korngrößen** | | **vorzugsweise** |
| **≤ 0,04 mm** | 42-53 | 45-50 |
| **> 0,04 -0,063 mm** | 14-31 | 16-23 |
| **> 0,063 - 0,09 mm** | 11-27 | 14-22 |
| **> 0,09 - 0,2 mm** | 4-17 | 5-13 |
| **> 0,2 mm** | 0-3 | 0-2 |

6. Trockenputzmischung nach einem der vorhergehenden Ansprüche,
**dadurch gekennzeichnet, dass**
die Mikroglashohlkugeln (1)
a) einen mittleren Teilchendurchmesser d₅₀ von 45 bis 60 µm, bevorzugt von 50 bis 55 µm, und/oder einen d₉₀-Wert von 70 bis 105 µm, bevorzugt von 75 bis 85 µm, bestimmt jeweils gemäß ISO 13320:2009-10 mittels Lasergranulometrie,
und/oder
b) einen maximalen Teilchendurchmesser, bestimmt gemäß ISO 13320:2009-10 mittels Lasergranulometrie, von ≤ 115 µm und/oder
c) eine Schüttdichte gemäß DIN EN 459-2:2010-12, von 60 bis 100 g/cm³, bevorzugt von 75 bis 85 g/cm³,
aufweisen.

7. Trockenputzmischung nach einem der vorhergehenden Ansprüche,
**dadurch gekennzeichnet, dass**
die Trockenputzmischung
a) eine offene Porosität von 50 bis 54 Vol.-%, bevorzugt 51 bis 57 Vol.-%, bestimmt mittels Pyknometer gemäß DIN EN 1936:2007-02, und/oder
b) einen Wasseraufnahmekoeeffizient gemäß DIN EN ISO 15148:2018-12 von 1 bis 3 kg/m²·h^{0,5}, bevorzugt 1,4 bis 2,5 kg/m²·h^{0,5},
aufweist.

8. Trockenputzmischung nach einem der vorhergehenden Ansprüche,
**dadurch gekennzeichnet, dass**
a) die Mikroglashohlkugeln (1) einzellig ausgebildet sind, und/oder
b) die Mikroglashohlkugeln (1) aus Borsilikatglas oder Kalknatronglas, bevorzugt aus Borsilikatglas, bestehen.

9. Trockenputzmischung nach einem der vorhergehenden Ansprüche,
**dadurch gekennzeichnet, dass**
die Trockenputzmischung, ohne die gegebenenfalls vorhandenen Fasern, eine maximale Korngröße ≤ 0,2 mm aufweist.

10. Trockenputzmischung nach einem der vorhergehenden Ansprüche,
**dadurch gekennzeichnet, dass**
a) die Trockenputzmischung zumindest einen Luftporenbildner aufweist,
und/oder
b) die Trockenputzmischung einen Anmachwasserbedarf gemäß DIN EN 1015-2:2007-05 von 160 bis 240 M.-%, bevorzugt 180 bis 220 M.-%, bezogen auf die Trockenmasse der Trockenputzmischung, aufweist.

11. Trockenputzmischung nach einem der vorhergehenden Ansprüche,
**dadurch gekennzeichnet, dass**
die Trockenputzmischung als Siloware oder Sackware vorliegt.

12. Frischmörtel aufweisend eine mit Wasser angemachte Trockenputzmischung nach einem der vorhergehenden Ansprüche,
wobei der Frischmörtel vorzugsweise eine Frischmörtelrohdichte gemäß DIN EN 1015-1 :2007-05 von 300 bis 500 kg/m³, bevorzugt von 390 bis 450 kg/m³, aufweist.

13. Auf einen, insbesondere vertikalen, Untergrund, vorzugsweise eine Wand, durch Spritzen aufgebrachte Dämmschicht,
**dadurch gekennzeichnet, dass**
die Dämmschicht hergestellt ist aus einem Frischmörtel gemäß Anspruch 12,
wobei vorzugsweise die Dämmschicht einschichtig aufgebracht ist oder hergestellt ist durch schichtweises Aufbringen des Frischmörtels frisch auf frisch.

14. Verfahren zum Aufbringen einer Dämmschicht auf einen, insbesondere vertikalen, Untergrund, vorzugsweise eine Wand, durch Aufspritzen eines Frischmörtels auf den Untergrund,
**dadurch gekennzeichnet, dass**
ein Frischmörtel gemäß Anspruch 12 verwendet wird.

15. Verfahren nach Anspruch 14,
**dadurch gekennzeichnet, dass**
a) die Dämmschicht einschichtig aufgebracht wird oder hergestellt wird durch schichtweises Aufbringen des Frischmörtels frisch auf frisch, und/oder
b) eine Dämmschicht hergestellt wird, die eine Dicke von 20 bis 200 mm, bevorzugt 60 bis 100 mm, aufweist, wobei vorzugsweise ab einer Dicke von > 100 mm zusätzlich ein Putzträger verwendet wird.

## Claims

1. Factory-mixed dry plaster mixture for sprayable insulation, comprising at least one binder and at least one aggregate,
**characterized in that**
the dry plaster mixture comprises
- 36 to 52 wt.%, preferably 40 to 47 wt.%, micro hollow glass spheres (1) or in sum 36 to 52 wt.%, preferably 40 to 47 wt.%, micro hollow glass spheres (1) and aerogel, wherein the amount of aerogel in the dry plaster mixture is ≤ 30 wt.%, preferably ≤ 20 wt.%,
and
- 40 to 56 wt.%, preferably 45 to 53 wt.%, calcium sulfoaluminate cement of calcium sulfoaluminate clinker and at least one calcium sulfate component as activator for the calcium sulfoaluminate clinker.

2. Dry plaster mixture according to claim 1,
**characterized in that**
the dry plaster mixture comprises
a) a mortar compressive strength according to DIN EN 1015-11:2007-05 of 0.6 to 1.0 N/mm², preferably of 0.75 to 0.85 N/mm²,
and/or
b) a mortar flexural strength according to DIN EN 1015-11:2007-05 of 0.6 to 1.0 N/mm², preferably of 0.7 to 0.9 N/mm².

3. Dry plaster mixture according to one of the preceding claims,
**characterized in that**
a) the dry plaster mixture consists of at least 91 wt.%, preferably of at least 94 wt.%, more preferably of at least 96 wt.%, of the calcium sulfoaluminate cement and the micro hollow glass spheres (1),
and/or
b) the dry plaster mixture comprises 4 to 9 wt.%, preferably 6 to 9 wt.% of further constituents, wherein the dry plaster mixture preferably comprises at least one additive and/or at least one admixture and/or fibers,
and/or
c) the dry plaster mixture comprises at least one air entraining agent and/or at least one water retention agent, e.g. methyl cellulose, and/or at least one thickening agent and/or at least one dispersion pulver and/or at least one hydrophobizing agent and/or at least one retarding agent as admixture.

4. Dry plaster mixture according to any one of the preceding claims,
**characterized in that**
the calcium sulfoaluminate cement has a stiffening beginning of 3 to 7 minutes, preferably 4 to 6 minutes, according to DIN EN 13279-2:2014-03.

5. Dry plaster mixture according to one of the preceding claims,
**characterized in that**
a) the dry plaster mixture has a thermal conductivity λ_{10dry} according to DIN EN 12664:2001-05 of from 0.032 to 0.055 W/m·K, preferably from 0.038 to 0.042 W/m K,
and/or
b) the dry plaster mixture has a bulk density according to DIN EN 459-2:2010-12 of 120 to 150 kg/m³, preferably of 130 to 140 kg/m³,
and/or
c) the dry plaster mixture has the following grain size distribution, determined on the basis of the sieve passage according to DIN EN 1015-1:2007-05 (the individual components add up to 100 wt.%):
| | **[wt.-%]** | |
|---|---|---|
| **grain sizes** | | **preferably** |
| **≤ 0,04 mm** | 42-53 | 45-50 |
| **> 0,04 -0,063 mm** | 14-31 | 16-23 |
| **> 0,063 - 0,09 mm** | 11-27 | 14-22 |
| **> 0,09 - 0,2 mm** | 4-17 | 5-13 |
| **> 0,2 mm** | 0-3 | 0-2 |

6. Dry plaster mixture according to any of the preceding claims,
**characterized in that**
the micro hollow glass spheres (1) comprise
a) a mean particle diameter d₅₀ of 45 to 60 µm, preferably of 50 to 55 µm, and/or a d₉₀ value of 70 to 105 µm, preferably of 75 to 85 µm, determined in each case according to ISO 13320:2009-10 by means of laser granulometry,
and/or
b) a maximum particle diameter, determined in accordance with ISO 13320:2009-10 by means of laser granulometry, of ≤ 115 µm,
and/or
c) a bulk density according to DIN EN 459-2:2010-12 of 60 to 100 g/cm³, preferably 75 to 85 g/cm³.

7. Dry plaster mixture according to one of the preceding claims,
**characterized in that**
the dry plaster mixture comprises
a) an open porosity of 50 to 54 vol.%, preferably 51 to 57 vol.%, determined by means of a pycnometer according to DIN EN 1936:2007-02,
and/or
b) a water absorption coefficient according to DIN EN ISO 15148:2018-1 of 1 to 3 kg/m²·h^{0.5}, preferably 1.4 to 2.5 kg/m²·h^{0.5}.

8. Dry plaster mixture according to one of the preceding claims,
**characterized in that**
a) the micro hollow glass spheres (1) are single-celled,
and/or
b) the micro hollow glass spheres (1) consist of borosilicate glass or soda-lime glass, preferably of borosilicate glass.

9. Dry plaster mixture according to one of the preceding claims,
**characterized in that**
the dry plaster mixture, excluding any fibers that may be present, has a maximum grain size ≤ 0.2 mm.

10. Dry plaster mixture according to any one of the preceding claims,
**characterized in that**
a) the dry plaster mixture comprises at least one air entraining agent,
and/or
b) the dry plaster mixture has a mixing water requirement according to DIN EN 1015-2:2007-05 of 160 to 240 wt.%, preferably 180 to 220 wt.%, based on the dry mass of the dry plaster mixture.

11. Dry plaster mixture according to one of the preceding claims,
**characterized in that**
the dry plaster mixture is in the form of silo goods or bagged goods.

12. Fresh mortar comprising a dry plaster mixture mixed with water according to one of the preceding claims,
wherein the fresh mortar preferably comprises a fresh mortar density according to DIN EN 1015-1:2007-05 of 300 to 500 kg/m³, preferably 390 to 450 kg/m³.

13. An insulating layer applied by spraying to a, in particular vertical, underground, preferably a wall,
**characterized in that**
the insulating layer is produced from a fresh mortar according to claim 12, wherein preferably the insulating layer is applied in a single layer or is produced by applying the fresh mortar fresh on fresh in layers.

14. Method of applying an insulating layer to a, in particular vertical, underground, preferably a wall, by spraying a fresh mortar onto the underground,
**characterized in that**
a fresh mortar according to claim 12 is used.

15. Method according to claim 14,
**characterized in that**
a) the insulating layer is applied in a single layer or is produced by applying the fresh mortar fresh on fresh in layers,
and/or
b) an insulating layer is produced which has a thickness of 20 to 200 mm, preferably 60 to 100 mm, and preferably a plaster base is additionally used as of a thickness of > 100 mm.

## Revendications

1. Mélange d'enduit sec mélangé en usine pour une isolation pulvérisable, présentant au moins un liant et au moins un agrégat,
**caractérisé en ce que**
le mélange d'enduit sec présente
- 36 à 52 % en masse, de préférence 40 à 47 % en masse, de microsphères creuses de verre (1) ou, au somme, 36 à 52 % en masse, de préférence 40 à 47 % en masse, de microsphères creuses de verre (1) et d'aérogel, la proportion d'aérogel dans le mélange d'enduit sec étant ≤ 30 % en masse, de préférence ≤ 20 % en masse,
et
- 40 à 56 % en masse, de préférence 45 à 53 % en masse, de ciment au sulfoaluminate de calcium constitué de clinker au sulfoaluminate de calcium et d'au moins un composant de sulfate de calcium en tant que activateur pour le clinker au sulfoaluminate de calcium.

2. Mélange d'enduit sec selon la revendication 1,
**caractérisé en ce que**
le mélange d'enduit sec comprend
a) une résistance à la compression du mortier selon DIN EN 1015-11:2007-05 de 0,6 à 1,0 N/mm², de préférence de 0,75 à 0,85 N/mm², et/ou
b) une résistance à la flexion du mortier selon DIN EN 1015-11:2007-05 de 0,6 à 1,0 N/mm² , de préférence de 0,7 à 0,9 N/mm².

3. Mélange d'enduit sec selon l'une quelconque des revendications précédentes,
**caractérisé en ce que**
a) le mélange d'enduit sec est constitué à au moins 91 % en masse, de préférence à au moins 94 % en masse, de préférence à au moins 96 % en masse, du ciment au sulfoaluminate de calcium et des microsphères creuses en verre (1),
et/ou
b) le mélange d'enduit sec comprend 4 à 9 % en masse, de préférence 6 à 9 % en masse d'autres composants, le mélange d'enduit sec comprenant de préférence au moins un additif et/ou au moins un adjuvant et/ou des fibres,
et/ou
c) le mélange d'enduit sec comprend au moins un entraîneur d'air et/ou au moins un agent de rétention d'eau, par exemple de la méthylcellulose, et/ou au moins un agent épaississant et/ou au moins une poudre de dispersion et/ou au moins un agent d'hydrophobisation et/ou au moins un retardateur comme additif.

4. Mélange d'enduit sec selon l'une quelconque des revendications précédentes,
**caractérisé en ce que**
le ciment au sulfoaluminate de calcium comprend un début de raidissement de 3 à 7 minutes, de préférence de 4 à 6 minutes, selon la norme DIN EN 13279-2:2014-03.

5. Mélange d'enduit sec selon l'une quelconque des revendications précédentes,
**caractérisé en ce que**
a) le mélange d'enduit sec comprend une conductivité thermique λ₁₀ₜᵣ selon DIN EN 12664:2001-05 de 0,032 à 0,055 W/m·K, de préférence de 0,038 à 0,042 W/m·K,
et/ou
b) le mélange d'enduit sec comprend un poids au vrac selon DIN EN 459-2:2010-12 de 120 à 150 kg/m³, de préférence de 130 à 140 kg/m³,
et/ou
c) le mélange d'enduit sec comprend la distribution granulométrique suivante, déterminée à l'aide du tamisage selon la norme DIN EN 1015-1:2007-05 (les différents composants s'additionnent à 100 M.-%) :
| | **[% en masse]** | |
|---|---|---|
| **tailles du grain** | | **de préférence** |
| **≤ 0,04 mm** | 42-53 | 45-50 |
| **> 0,04 - 0,063 mm** | 14-31 | 16-23 |
| **> 0,063 - 0,09 mm** | 11-27 | 14-22 |
| **> 0,09 - 0,2 mm** | 4-17 | 5-13 |
| **> 0,2 mm** | 0-3 | 0-2 |

6. Mélange d'enduit sec selon l'une quelconque des revendications précédentes,
**caractérisé en ce que**
les microsphères creuses en verre (1) comprennent
a) un diamètre moyen de particules d₅₀ de 45 à 60 µm, de préférence de 50 à 55 µm, et/ou une valeur d₉₀ de 70 à 105 µm, de préférence de 75 à 85 µm, déterminée dans chaque cas selon ISO 13320:2009-10 par granulométrie laser,
et/ou
b) un diamètre maximal des particules, déterminé selon la norme ISO 13320:2009-10 par granulométrie laser, de ≤ 115 µm
et/ou
c) une densité apparente selon la norme DIN EN 459-2:2010-12, de 60 à 100 g/cm³, de préférence de 75 à 85 g/cm³.

7. Mélange d'enduit sec selon l'une quelconque des revendications précédentes,
**caractérisé en ce que**
le mélange d'enduit sec comprend
a) une porosité ouverte de 50 à 54 % en volume, de préférence de 51 à 57 % en volume, déterminée au moyen d'un pycnomètre selon la norme DIN EN 1936:2007-02,
et/ou
b) un coefficient d'absorption d'eau selon la norme DIN EN ISO 15148:2018-12 de 1 à 3 kg/m²·h^{0,5}, de préférence de 1,4 à 2,5 kg/m²·h^{0,5}.

8. Mélange d'enduit sec selon l'une quelconque des revendications précédentes,
**caractérisé en ce que**
a) les microsphères creuses en verre (1) sont formées de manière unicellulaire,
et/ou
b) les microsphères creuses en verre (1) sont constituées de verre au borosilicate ou de verre au silicate de calcium, de préférence de verre au borosilicate.

9. Mélange d'enduit sec selon l'une quelconque des revendications précédentes,
**caractérisé en ce que**
le mélange d'enduit sec, sans les fibres éventuellement présentes, comprend une taille du grain maximale ≤ 0,2 mm.

10. Mélange d'enduit sec selon l'une quelconque des revendications précédentes,
**caractérisé en ce que**
a) le mélange d'enduit sec comprend au moins un agent entraîneur d'air,
et/ou
b) le mélange d'enduit sec comprend un besoin en eau de gâchage selon DIN EN 1015-2:2007-05 de 160 à 240 % en masse, de préférence de 180 à 220 % en masse, par rapport à la masse sèche du mélange d'enduit sec.

11. Mélange d'enduit sec selon l'une quelconque des revendications précédentes,
**caractérisé en ce que**
le mélange d'enduit sec se présente sous forme de marchandise en silo ou en sac.

12. Mortier frais comprenant un mélange d'enduit sec gâché à l'eau selon l'une des revendications précédentes,
le mortier frais comprenant de préférence une masse volumique apparente de mortier frais selon DIN EN 1015-1:2007-05 de 300 à 500 kg/m³, de préférence de 390 à 450 kg/m³.

13. Couche d'isolation appliquée par pulvérisation sur un support, notamment vertical, de préférence sur un mur,
**caractérisé en ce que**
la couche d'isolation est fabriquée à partir d'un mortier frais selon la revendication 12,
la couche d'isolation étant de préférence appliquée en une couche ou étant fabriquée par application couche par couche du mortier frais, frais sur frais.

14. Procédé pour appliquer une couche d'isolation sur un support, en particulier vertical, de préférence sur un mur, par pulvérisation d'un mortier frais sur le support,
**caractérisé en ce que**
un mortier frais selon la revendication 12 est utilisé.

15. Procédé selon la revendication 14,
**caractérisé en ce que**
a) la couche d'isolation est appliquée en une seule couche ou est réalisée en appliquant le mortier frais couche par couche, frais sur frais,
et/ou
b) une couche d'isolation est fabriquée, qui comprend une épaisseur de 20 à 200 mm, de préférence de 60 à 100 mm, un support d'enduit étant de préférence utilisé en plus à partir d'une épaisseur > 100 mm.
